# EUROPÄISCHE PATENTSCHRIFT

(11) **EP 2 845 834 B1**
(45) Veröffentlichungstag und Bekanntmachung des Hinweises auf die Patenterteilung: **01.06.2016**
(21) Anmeldenummer: 13004334.2
(22) Anmeldetag: 04.09.2013
(51) Int. Cl.: B66D 1/14, F16D 43/202, F16D 7/04

(54) **Hebesystem, Verwendung einer Überlastkupplung und Verfahren zum Betrieb eines Hebesystems**
Lifting system, use of an overload coupling and method for operating a lifting system
Système de levage, usage d'un limiteur de couple et procédé de fonctionnement d'un système de levage

(43) Veröffentlichungstag der Anmeldung: 11.03.2015
(73) Patentinhaber: EFS-Gesellschaft für Hebe- und Handhabungstechnik mbh, 74226 Nordheim (DE); Perabo, Klaus, 65391 Lorch (DE)
(72) Erfinder: Klaus Perabo, 65391 Lorch (DE)
(74) Vertreter: Zurhorst, Stefan

(56) Entgegenhaltungen:
- EP-A1- 0 354 988
- EP-A2- 0 869 099
- WO-A1-2009/036595
- DE-A1- 4 007 483
- DE-A1- 10 005 411
- DE-B- 1 140 033
- US-A- 3 603 436
- US-A1- 2005 133 330

## Beschreibung

Die Erfindung betrifft ein Hebesystem der im Oberbegriff des Anspruchs 1 angegebenen Gattung, eine Überlastkupplung zur Verwendung in einem solchen Hebesystem sowie ein Verfahren zum Betrieb eines solchen Hebesystems.

In der Handhabungstechnik werden Gegenstände mittels eines Handhabungssystems von einem Ort zum anderen verfahren, um sie beispielsweise von einem Zuführband zu einer Bearbeitungsmaschine zu verbringen. Solche Handhabungssysteme weisen neben einer horizontalen Verfahreinrichtung auch ein vertikal arbeitendes Hebesystem mit einer Halteeinrichtung zum Anheben und Absenken eines Gegenstandes in Richtung einer vertikalen Hubachse auf. Das Hebesystem umfasst eine Motoreinheit mit einer Antriebswelle, einen Drehwinkelgeber für die Antriebswelle sowie ein Getriebe mit einer Eingangswelle, wobei die Motoreinheit mit ihrer Antriebswelle die Eingangswelle des Getriebes antreibt.

Die genannte Motoreinheit umfasst in der Regel einen Stellmotor, dessen Drehzahl geregelt werden kann, um definierte vertikale Lastbewegungen zu ermöglichen. Der am Motor bzw. an dessen Antriebswelle vorhandene Drehwinkelgeber kann Drehwinkel von 0° bis 360° in hinreichend kleinen Schritten erfassen. Aus der aktuellen Drehwinkelposition in Verbindung mit dem bekannten Übersetzungsverhältnis der Getriebeanordnung kann eine sehr genau definierte Höhenposition der Halteeinrichtung sowie der darin gehaltenen Last abgeleitet werden, was für eine genaue Positionierung der Last erforderlich ist.

Damit die Höhenbestimmung gelingt, müssen mindestens zwei Voraussetzungen erfüllt sein: Als erste Voraussetzung muss vorab eine Höhenkalibrierung vorgenommen werden. Hierzu wird die Halteeinrichtung bzw. die darin gehaltene Last auf einen bestimmten Referenzhöhenwert mit größtmöglicher Genauigkeit verfahren, bzw. es wird in einer bestimmten Position der Referenzhöhenwert messtechnisch ermittelt. Gleichzeitig wird der zugehörige aktuelle Drehwinkel der Motor-Antriebswelle erfasst. Hieraus und aus dem Übersetzungsverhältnis der gesamten Getriebeanordnung, genauer aus dem Hub der Halteeinrichtung, der aus einer 360°-Umdrehung der Motor-Antriebswelle folgt, kann später allein über die Drehwinkelabfrage in Verbindung mit ganzzahligen Vielfachen von einzelnen 360°-Umdrehungen eine exakte Höhenbestimmung vorgenommen werden. Als zweite Voraussetzung ist sicherzustellen, dass während der gesamten Handhabung eine feste Zuordnung zwischen Drehposition des Motors und Drehposition der Getriebe-eingangswelle beibehalten wird. Sofern diese feste Drehwinkelzuordnung verloren geht, muss der oben beschriebene aufwändige Kalibrierungsvorgang erneut vorgenommen werden, was sehr arbeits- und zeitintensiv ist.

Beim Heben der Last wird über das Getriebe ein Drehmoment eingeleitet, das die Halteeinrichtung in Richtung der vertikalen Hubachse hebt. Das Absenken bewirkt das Gewicht der Last und der Hubeinrichtung selbst. Dem wirkt der Motor mit seinem Drehmoment bremsend entgegen. Kollidiert die Last beim Absenken mit einem Hindernis, wird sie dadurch abrupt abgebremst. Der bislang im Generatorbetrieb bremsende Motor ändert dann schlagartig seine Betriebsweise und läuft motorisch mit seiner auf maximaler Drehzahl befindlichen Motormasse in das blockierte Getriebe. Direkte Folgen hiervon sind häufig Getriebeschäden, die den Austausch dieser Komponente erfordert. Derartige Kollisionen treten häufig insbesondere bei der Inbetriebnahme, im Einrichtbetrieb, bei Fehlmeldungen oder bei Steuerungsfehlern auf.

Zur Vermeidung solcher Kollisionsschäden ist der Einsatz von Überlastkupplungen bekannt, mittels derer die Antriebswelle der Motoreinheit und die Eingangswelle des Getriebes verbunden sind, und die oberhalb eines Grenzdrehmomentes durchrutschen. Eine vernünftige Auslegung des Grenz- bzw. Durchrutschmomentes ist beim Einsatz an der vertikalen Hubachse jedoch schwierig, da zum einen beim Anheben der Last ein hohes Drehmoment übertragen werden muss, während zum anderen ein solch hohes Drehmoment beim Absenken nicht erforderlich ist. Außerdem ist für den Kollisionsfall beim Absenken ein möglichst kleines Grenz- bzw. Durchrutschmoment erwünscht. Es muss deshalb ein nicht immer befriedigender Kompromiss eingegangen werden. Insbesondere führt aber das Durchrutschen der Überlastkupplung dazu, dass die Drehwinkelzuordnung zwischen Motor-Antriebswelle und Getriebe-Eingangswelle und damit die für eine genaue Positionierung erforderliche Höheninformation verloren geht. Nach einem Durchrutschen muss die oben beschriebene aufwändige Höhenkalibrierung erneut vorgenommen werden.

Die US 2005/0133330 A1 beschreibt eine Rutschkupplung mit unsymmetrischer Auslösecharakteristik. Die in den entgegengesetzten Drehrichtungen übertragbaren Drehmomente sind unterschiedlich groß. Aus der DE 40 07 483 A1 ist eine Überlastkupplung mit einer asymmetrischen Verteilung ihrer Zähne bekannt. Hierdurch soll erreicht werden, dass die Kupplungshälften im Anschluss an einen Überlastfall erst genau nach einer 360°-Relativverdrehung wieder gekoppelt werden.

EP0869099A offenbart einen Hebesystem gemäß dem Oberbegriff des Anspruchs 1. Der Erfindung liegt die Aufgabe zugrunde, ein gattungsgemäßes Hebesystem derart weiterzubilden, dass im Kollisionsfall unter Vermeidung von Schäden eine schnelle Wiederinbetriebnahme möglich ist.

Diese Aufgabe wird durch ein Hebesystem mit den Merkmalen des Anspruchs 1 gelöst.

Der Erfindung liegt des Weiteren die Aufgabe zugrunde, die Verwendung einer Überlastkupplung in einem solchen Hebesystems anzugeben, um ein sicheres Anheben und Absenken sowie eine eindeutige Höhenzuordnung der Last zu ermöglichen.

Diese Aufgabe wird durch die Verwendung einer Überlastkupplung mit den Merkmalen des Anspruchs 11 gelöst.

Der Erfindung liegt außerdem die Aufgabe zugrunde, ein Verfahren zum Betrieb eines solchen Hebesystems anzugeben, mittels dessen im Kollisionsfall nach Ausrasten der Überlastkupplung eine schnelle und genaue Wiederherstellung eines Referenzhöhenwertes und daraus folgend eine schnelle Wiederinbetriebnahme möglich ist.

Diese Aufgabe wird durch ein Verfahren mit den Merkmalen des Anspruchs 12 gelöst.

Nach der Erfindung ist ein Hebesystem bzw. eine Überlastkupplung zur Verwendung in einem solchen Hebesystem vorgesehen, wobei die Überlastkupplung einen Rastmechanismus mit einem motorseitigen Rastteil und einem getriebeseitigen Rastteil aufweist. Der Rastmechanismus weist eine Rastcharakteristik auf, welche ein erstes übertragbares Drehmoment in einer Absenkdrehrichtung und ein zweites übertragbares Drehmoment in einer Anhebedrehrichtung derart vorsieht, dass das erste übertragbare Drehmoment kleiner als das zweite übertragbare Drehmoment ist. Der Rastmechanismus weist ferner derart ausgestaltete Drehpositioniermittel auf, dass eine Einrastung des motorseitigen Rastteils in das getriebeseitige Rastteil bezogen auf die Anhebedrehrichtung innerhalb von 360° in nur einer relativen Drehwinkelstellung möglich ist.

Infolge der unsymmetrischen Rastcharakteristik mit einem vergleichsweise hohen übertragbaren Drehmoment in der Anhebedrehrichtung können selbst schwere Lasten bzw. Gegenstände unter Einwirkung eines entsprechend hohen Antriebsdrehmoments zuverlässig angehoben werden, ohne dass die Überlastkupplung ausrastet bzw. durchrutscht. Beim Absenkvorgang sind keine solchen großen übertragbaren Drehmomente erforderlich. Infolge des vergleichsweise kleineren ersten übertragbaren Drehmomentes spricht die Überlastkupplung im Kollisionsfall frühzeitig an, so dass Kollisionsschäden zuverlässig vermieden sind. Anschließend stellen die vorgenannten Drehpositioniermittel sicher, dass beim Wiedereinrasten des Rastmechanismus eine eindeutige relative Drehwinkellage zwischen den beiden Rastteilen und damit zwischen der motorseitigen Antriebswelle und der getriebeseitigen Eingangswelle wiederhergestellt ist. Dies vereinfacht erheblich die Wiederherstellung des beim Ausrastvorgang verloren gegangenen Referenzhöhenwertes, insbesondere nach dem folgenden erfindungsgemäßen Verfahren.

Zunächst wird im gewöhnlichen Betrieb die Halteeinrichtung bzw. der davon gehaltene Gegenstand innerhalb eines Arbeitshöhenbereichs mittels des Hebesystems bewegt. Zuvor wurde in einem Kalibriervorgang ein Referenzhöhenwert bestimmt. Die aktuelle Höhe der Halteeinrichtung wird während ihrer Handhabung aus dem zuvor ermittelten Referenzhöhenwert und den Signalen des Drehwinkelgebers bestimmt. Sofern nun bei einem Absenken der Halteeinrichtung bzw. des davon gehaltenen Gegenstandes der Rastmechanismus der Überlastkupplung beispielweise infolge einer unbeabsichtigten Kollision ausrastet, geht zunächst die definierte relative Drehwinkelposition zwischen den beiden Rastteilen und damit der für die Lagesteuerung bzw. Lageregelung erforderliche Referenzhöhenwert verloren. Zur Wiederherstellung des Referenzhöhenwertes wird nun mittels der Motoreinheit ein Anheben der Halteeinrichtung eingeleitet, in dessen Folge der ausgerastete Rastmechanismus bezogen auf die Anhebedrehrichtung innerhalb von 360° in nur einer möglichen und definierten relativen Drehwinkelstellung wieder einrastet. Nach dem Einrasten wird nun die Halteeinrichtung angehoben, wobei bereits in diesem Zustand die ursprünglich vorgesehene relative Drehwinkellage zwischen den beiden Rastteilen wieder hergestellt ist.

Die Halteeinrichtung wird nun weiter bis in einen Referenzhöhenbereich angehoben, wobei die Höhenerstreckung des Referenzhöhenbereichs ≤ ein solcher Hub der Halteeinrichtung ist, der aus einer 360°-Umdrehung der Antriebswelle der Motoreinheit folgt. Innerhalb dieses Referenzhöhenbereichs wird nun die aktuelle Drehwinkelstellung der Antriebswelle mittels des Drehwinkelgebers ermittelt und daraus der Referenzhöhenwert der Halteeinrichtung bzw. des davon gehaltenen Gegenstandes wiederhergestellt.

Anders als beim Stand der Technik ist es also nicht erforderlich, einen exakten Höhenwert anzufahren bzw. messtechnisch zu ermitteln. Außerdem muss das Signal des Drehwinkelgebers nicht mehr erneut einem solchen Referenzhöhenwert zugeordnet werden. Vielmehr reicht eine Grobpositionierung innerhalb eines großzügigen Referenzhöhenbereichs anstelle eines exakten Referenzhöhenwertes aus. Die genaue Höhenbestimmung kann innerhalb des Referenzhöhenbereichs allein anhand des Drehwinkelgebers vorgenommen werden, da ja infolge der erfindungsgemäß ausgestalteten Überlastkupplung eine innerhalb von 360° eindeutige Drehwinkelzuordnung von motorseitiger Antriebswelle und getriebeseitiger Eingangswelle sichergestellt ist. Hiervon ausgehend kann umgehend und ohne großen Kalibrieraufwand der gewöhnliche Arbeitsbetrieb wieder aufgenommen werden, indem die Halteeinrichtung erneut in den Arbeitshöhenbereich verfahren und dort bewegt wird. Die aktuelle Höhe kann erneut jederzeit aus dem wiederhergestellten Referenzhöhenwert und den Signalen des Drehwinkelgebers bestimmt werden. Der Drehwinkelgeber gibt eine exakte Position innerhalb von 0° bis 360° an. Aus einer vollen 360°-Umdrehung folgt der oben genannte Hub. Aus der Summe aller 360°-Umdrehungen und der aktuellen Drehwinkelstellung innerhalb eines 360°-Kreises resultiert jetzt die exakte aktuelle Höhe, welche unter Umgehung aufwändiger Kalibrierverfahren allein durch grobes Anfahren des Referenzhöhenbereichs ermittelt werden kann. Eine eindeutige Höhenzuordnung der Last ist einfach wiederhergestellt, so dass unter Vermeidung von Schäden eine schnelle Wiederinbetriebnahme möglich ist.

Es kann zweckmäßig sein, die oben beschriebene unsymmetrische Rastcharakteristik derart auszulegen, dass ein Ausrasten mit erhöhtem Drehmoment auch in der Anhebedrehrichtung möglich ist. Bevorzugt ist die Rastcharakteristik jedoch so ausgelegt, dass ein überlastbedingtes Ausrasten nur in der Absenkdrehrichtung zugelassen ist. Dies ist in der Praxis der relevanteste Fall. Darüber hinaus erlaubt der Verzicht auf ein Ausrasten in der Anhebedrehrichtung das zuverlässige Anheben selbst schwerer Lasten.

Für die Ausgestaltung der Überlastkupplung kommen beliebige Bauformen in Betracht, die die vorgenannte Rastcharakteristik erzeugen. Bevorzugt ist die Überlastkupplung eine Klauenkupplung mit stirnseitigen Klauen am motorseitigen Rastteil und/oder am getriebeseitigen Rastteil, wobei das motorseitige Rastteil in einer drehmomentübertragenden Arbeitsposition unter Federvorspannung in einer Axialrichtung gegen das getriebeseitige Rastteil gedrückt ist, und wobei das motorseitige Rastteil aus seiner Arbeitsposition heraus in der Axialrichtung gegenüber dem getriebeseitigen Rastteil in eine Ausrastposition relativ verschiebbar ist. Hierdurch ist eine kompakte Bauform geschaffen, die einerseits hohe Momente übertragen kann, andererseits aber auch eine feinfühlige Einstellung des maximal übertragbaren Drehmomentes zulässt. Im ausgerasteten Zustand bei zunächst noch weiterlaufendem Antrieb ist der Verschleiß gering.

Bevorzugt sind die Klauen unsymmetrisch mit in der Absenkdrehrichtung wirkenden Gleitflanken und in der Anhebedrehrichtung wirkenden, im Vergleich zu den Gleitflanken steileren Hubflanken ausgebildet. Eine optionale Möglichkeit besteht darin, die Hubflanken mit einer solchen Neigung zu versehen, dass hierdurch jeweils eine Hinterschneidung gebildet ist. Im einmal eingegriffenen Zustand tritt infolge der Hinterschneidung eine selbstverstärkende Verkeilung ein, so dass selbst bei sehr hohen Drehmomenten in der Anhebedrehrichtung ein versehentliches Ausrasten nicht stattfinden kann.

Für die Ausgestaltung der Drehpositioniermittel kommen verschiedene geeignete Möglichkeiten in Betracht, die beispielsweise in einem ungleichmäßigen Abstand zwischen den einzelnen Klauen bestehen können. Bevorzugt sind die Drehpositioniermittel durch einen axialen Vorsprung und nur einer einzigen zum Vorsprung korrespondierenden Vorsprungaufnahme gebildet. Hierdurch ist sichergestellt, dass tatsächlich nur die einzige relative Drehwinkelstellung innerhalb von 360° eingenommen werden kann, während unbeabsichtigte Zwischenstellungen ausgeschlossen sind.

In einer zweckmäßigen Weiterbildung geht der Vorsprung flächenbündig in eine ringförmige Gleitfläche über, wobei die ringförmige Gleitfläche durch die Vorsprungaufnahme unterbrochen ist. Hierdurch wird erreicht, dass bei Ausrasten der Überlastkupplung der gegenüberliegende Vorsprung ohne Kontakt mit den Klauen auf der Gleitfläche abgleitet, bis er wieder in die Vorsprungaufnahme einrasten kann. Dadurch, dass der Vorsprung auf Abstand zu den gegenüberliegenden Klauen gehalten wird, kommt es nicht zum Rattern, sondern zu einer gleichförmigen Gleitbewegung, wodurch der Verschleiß minimiert ist.

In einer bevorzugten Ausführungsform sind das motorseitige Rastteil und/oder das getriebeseitige Rastteil an einem zugeordneten Adapterstück längsverschieblich und drehfest insbesondere mit einer Vielkeilverzahnung gehalten, wobei Mittel vorgesehen sind, die eine Montage des motorseitigen Rastteils und/oder des getriebeseitigen Rastteils am zugeordneten Adapterstück in nur einer relativen Drehwinkellage erlauben. Solche Mittel können beispielsweise in einer Fehlstelle der Vielkeilverzahnung bestehen. Es ist eine einfache 360° Lagesicherung gebildet, welche den Vorteil hat, dass man später noch die Vorspannung der Druckfeder verändern kann oder allgemeine Wartungs- und Montage-/Demontagearbeiten vornehmen kann, wobei ein erneutes Einrichten bzw. eine erneute Höhenkalibrierung wegen unveränderter Drehwinkellage entfällt.

In zweckmäßiger Weiterbildung umfasst die Überlastkupplung eine Sensoranordnung zur Erfassung des ein- bzw. ausgerasteten Zustandes des Rastmechanismus. Vorteilhaft weist das Hebesystem eine Steuereinrichtung auf, die zur Ausführung des oben beschriebenen erfindungsgemäßen Verfahrens ausgelegt ist. Ohne großen manuellen Steueraufwand kann im Kollisions- und Ausrastfall eine selbsttätige Prozedur abgefahren werden, mittels derer der oben beschriebene Referenzhöhenwert wiederhergestellt wird.

Ein Ausführungsbeispiel der Erfindung ist nachfolgend anhand der Zeichnung näher beschrieben. Es zeigen:
- Fig. 1: in einer schematischen Seitenansicht ein Handhabungssystem für Gegenstände mit einem erfindungsgemäß ausgeführten Hebesystem mit einer erfindungsgemäßen Überlastkupplung in verschiedenen Arbeitspositionen,
- Fig. 2: in einer vergrößerten Detailansicht das Hebesystem nach Fig. 1 bei der Wiederherstellung eines Referenzhöhenwertes,
- Fig. 3: in einer teilweise geschnittenen Darstellung die Überlastkupplung des Hebesystems nach den Fig. 1 und 2 mit Einzelheiten zum konstruktiven Aufbau,
- Fig. 4: in einer Explosionsdarstellung die Einzelteile des Rastmechanismus der Überlastkupplung nach Fig. 3 mit Einzelheiten zur Ausgestaltung der Klauen, und
- Fig. 5: in einer Draufsicht ein Rastteil des Rastmechanismus nach Fig. 4 mit Einzelheiten zur räumlichen Anordnung der Klauen in Verbindung mit einem Vorsprung und einer Vorsprungaufnahme zur Sicherstellung einer definierten Drehwinkelstellung.

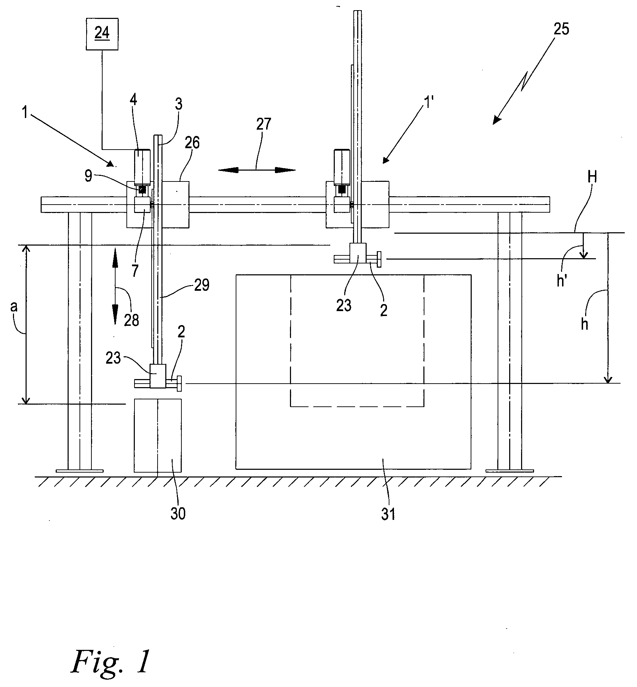

Fig. 1 zeigt in einer schematischen Seitenansicht ein Handhabungssystem 25 für Gegenstände 2. Das Handhabungssystem 25 ist hier beispielhaft zweiachsig mit einer horizontalen Verfahreinrichtung 26 zum Bewegen des Gegenstandes 2 in einer horizontalen Richtung entsprechend einem Doppelpfeil 27 sowie mit einem vertikalen Hebesystem 1 zum Anheben und Absenken des Gegenstandes 2 in Richtung einer vertikalen Hubachse 3 entsprechend einem Doppelpfeil 28 ausgestattet. Es kann eine beliebige Anzahl von Bewegungsachsen vorgesehen sein, solange zumindest das vertikale Hebesystem 1 vorhanden ist. Das beispielhaft gezeigte Handhabungssystem 25 ist in Form eines Portals aufgebaut, welches ein Zufuhrband 30 sowie eine Bearbeitungsmaschine 31 für die Gegenstände 2 überspannt. Das Hebesystem 1 ist mit einer Halteeinrichtung 23 zum Aufnehmen und Halten eines Gegenstandes 23 versehen. Der von dem Zuführband 30 herbeitransportierte Gegenstand 2 wird mittels der Halteeinrichtung 23 dort aufgegriffen, mittels des Hebesystems 1 in vertikaler Richtung entgegen der wirkenden Gewichtskraft angehoben, zur Bearbeitungsmaschine 31 verfahren und dort in Gewichtskraftrichtung zur weiteren Bearbeitung abgesenkt. In seiner horizontal zur Bearbeitungsmaschine 31 verfahrenen Position ist das Hebesystem mit dem Bezugszeichen 1' versehen. Anstelle des hier beispielhaft gezeigten Vorganges kann jeder beliebige Bewegungsvorgang des Hebesystems 1 mit einem Anheben und Absenken von beliebigen Gegenständen 2 im Rahmen der erfindungsgemäßen Handhabungstechnik vorgenommen werden.

Das erfindungsgemäße Hebesystem 1 umfasst eine Motoreinheit 4, ein Getriebe 7 und eine zwischengeschaltete Überlastkupplung 9. Eine antreibende Hebebewegung der Motoreinheit 4 wird über das Getriebe 7 auf eine Hubstange 29 übertragen, an deren unteren Ende die Halteeinrichtung 23 befestigt ist. Je nach Drehrichtung der Motoreinheit 4 wird die Hubstange 29 gemeinsam mit der Halteeinrichtung 23 entsprechend dem Doppelpfeil 28 in Richtung der vertikalen Hubachse 3 angehoben oder abgesenkt. Beim Anheben gegen die Gewichtskraft wird von der Motoreinheit 4 eine Antriebsleistung bereitgestellt. Das Absenken in der Gegenrichtung erfolgt infolge der auf die Hubstange 29, die Halteeinrichtung 23 und den Gegenstand 2 einwirkenden Gewichtskraft, wobei die Motoreinheit 4 ohne Antriebsleistung im Generatorbetrieb bremsend wirkt. Es kann aber auch ein aktiver Antrieb mit Motorleistung beim Absenken vorgesehen sein.

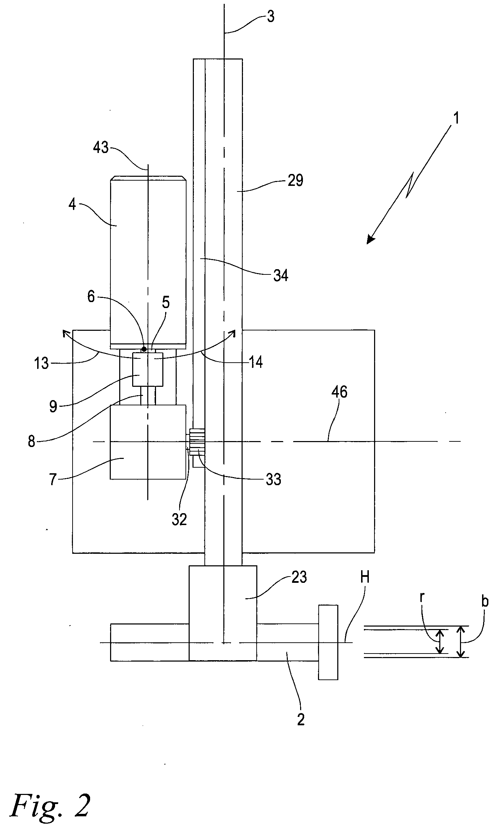

Fig. 2 zeigt in einer vergrößerten Detailansicht das Hebesystem 1 nach Fig. 1 mit weiteren Details seiner Komponenten, wobei gleiche Merkmale mit gleichen Bezugszeichen versehen sind. Die Motoreinheit 4 weist eine Antriebswelle 5 sowie einen schematisch angedeuteten Drehwinkelgeber 6 für die Antriebswelle 5 auf. Auf seiner der Motoreinheit 4 zugewandten Seite weist das Getriebe 7 eine Eingangswelle 8 auf. Die Antriebswelle 5 der Motoreinheit 4 und die Eingangswelle 8 des Getriebes 7 sind mittels der Überlastkupplung 9 drehmomentübertragend verbunden. Die Antriebswelle 5 und die Eingangswelle 8 weisen eine gemeinsame Drehachse 43 auf, die vertikal bzw. parallel zur Hubachse 3 liegt. Eine Ausgangswelle 32 des Getriebes 7 liegt rechtwinklig dazu mit einer horizontalen Drehachse 46. Von der Ausgangswelle 32 wird ein Ritzel 33 angetrieben, welches in eine fest mit der Hubstange 29 verbundene Zahnstange 34 eingreift. Die Antriebswelle 5 der Motoreinheit 4 kann wahlweise in einer Absenkdrehrichtung 13 oder in einer Anhebedrehrichtung 14 gedreht werden. Diese Drehbewegung wird über das Winkelgetriebe 7, das Ritzel 33 und die Zahnstange 34 je nach Drehrichtung in einer Auf- oder Abbewegung der Baueinheit aus Hubstange 29 und Halteeinrichtung 23 übertragen. Anstelle des gezeigten Zahnstangenantriebes kann auch ein Spindelantrieb oder dgl. vorgesehen sein.

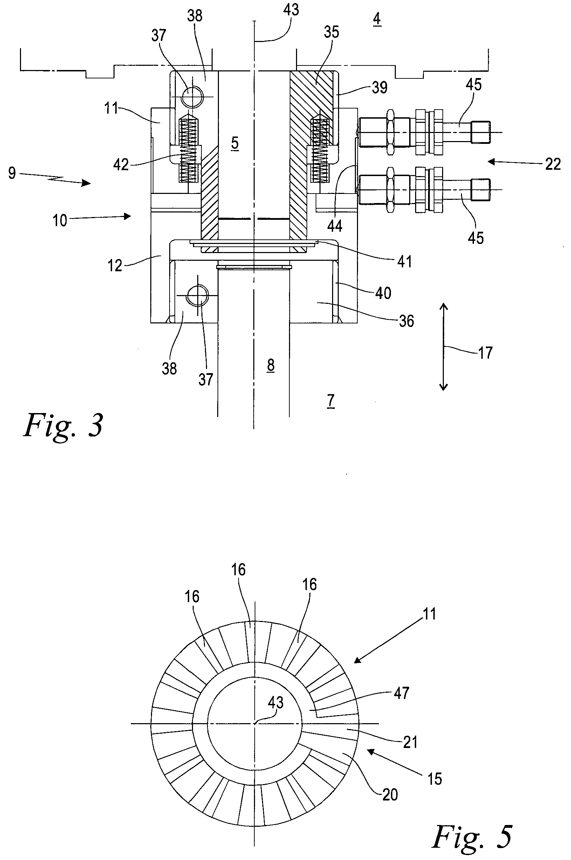

Fig. 3 zeigt in einer teilweise geschnittenen Darstellung die Überlastkupplung 9 nach Fig. 2. Demnach weist die Überlastkupplung 9 einen Rastmechanismus 10 mit einem motorseitigen Rastteil 11 und einem getriebeseitigen Rastteil 12 auf. Auf der Antriebswelle 5 der Motoreinheit 4 ist ein erstes Adapterstück 35 aufgespannt, während auf der Eingangswelle 8 ein zweites Adapterstück 36 aufgespannt ist. Hierzu weisen beide Adapterstücke 35, 36 je einen Schlitz 38 mit einer Spannschraube 37 auf, wodurch eine klemmende und drehfeste Verbindung zwischen dem ersten Adapterstück 35 und der Antriebswelle 5 bzw. dem zweiten Adapterstück 36 und der Eingangswelle 8 hergestellt ist. Alternativ oder in Kombination damit kann aber auch eine Passfeder, eine Keilverzahnung oder dergleichen vorgesehen sein.

Auf das erste und fest mit der Antriebswelle 5 verbundene Adapterstück 35 ist das motorseitige Rastteil 11 derart aufgeschoben, dass es zwar relativ zum ersten Adapterstück 35 in einer Axialrichtung 17 verschiebbar ist, dass aber gleichzeitig mittels einer Vielkeilverzahnung 39 zwischen dem Adapterstück 35 und dem ersten Rastteil 11 eine drehmomentübertragende Verbindung hergestellt ist. Das zweite Rastteil 12 ist ebenfalls auf das erste Adapterstück 35 der Antriebswelle 5 aufgeschoben und dort drehbar relativ zum ersten Adapterstück 35 gelagert. Eine axiale Fixierung des zweiten Rastteils 12 wird mittels eines Rings 41 vorgenommen. Zwischen dem ersten Adapterstück 35 und dem ersten, motorseitigen Rastteil 11 sind Vorspannmittel vorgesehen, die im gezeigten Ausführungsbeispiel als Druckfedern 42, genauer als Schraubendruckfedern ausgeführt sind. Es können aber auch andere Bauformen von Druckfedern 42 bzw. Vorspannmitteln zweckmäßig sein. Die Druckfedern 42 drücken das erste Rastteil 11 in der Axialrichtung 17 nach unten gegen das zweite Rastteil 12, welches zum Gegenhalten gegen die wirkende Druckkraft mittels des Rings 41 abgestützt ist. Durch die vorgenannte Druckvorspannung und weiter unten näher beschriebenen Rastmittel ist eine drehmomentübertragende Verbindung zwischen den beiden Rastteilen 11, 12 hergestellt.

Die Eingangswelle 8 des Getriebes 7 greift mittels einer Vielkeilverzahnung 40 in das zweite Rastteil 12 ein, so dass eine drehmomentübertragende Verbindung zwischen dem zweiten Rastteil 12 und der Eingangswelle 8 des Getriebes 7 hergestellt ist. Die Vielkeilverzahnung 40 kann hierbei geringe Lage- und Winkeltoleranzen ausgleichen. Im gewöhnlichen Arbeitsbetrieb stellt die vorgenannte Anordnung eine Drehmomentübertragung zwischen der Antriebswelle 5 der Motoreinheit 4 und der Eingangswelle 8 des Getriebes 7 her.

Die Vielkeilverzahnungen 39, 40 weisen jeweils eine nicht näher dargestellte Fehlstelle auf, bei der ein Keil bzw. eine Zahnlücke dazwischen fehlt. Hierdurch sind Mittel geschaffen, die eine Montage des motorseitigen Rastteils 11 und des getriebeseitigen Rastteils 12 am jeweils zugeordneten Adapterstück 35, 36 in nur einer relativen Drehwinkellage erlauben. Gleiches gilt auch für die oben schon erwähnte optionale Passfeder, Keilverzahnung oder dgl. zwischen dem ersten Adapterstück 35 und der Antriebswelle 5 bzw. zwischen dem zweiten Adapterstück 36 und der Eingangswelle 8. Natürlich kommen auch andere insbesondere formschlüssige Mittel wie unrunde Querschnitte oder dgl. in Frage, mittels derer eine Montage in nur einer relativen Drehposition möglich ist.

Fig. 4 zeigt in einer Explosionsdarstellung die Einzelteile des Rastmechanismus 10 nach Fig. 3. Hier ist zu erkennen, dass die beiden bevorzugt als Aluminium-Strangpress-Bauteile hergestellten Adapterstücke 35, 36 zentrische Bohrungen zur Aufnahme der jeweils ihnen zugeordneten Antriebs- bzw. Eingangswelle 5, 8 aufweisen. Insbesondere ist zu erkennen, dass die Überlastkupplung 9 (Fig. 3) durch die hier detailliert dargestellte Ausgestaltung des Rastmechanismus 10 eine Klauenkupplung mit stirnseitigen Klauen 16 am motorseitigen Rastteil 11 und/oder am getriebeseitigen Rastteil 12 ist. Die beiden Rastteile 11, 12 sind zweckmäßig als Kunststoff-Spritzgussbauteile hergestellt. Es kann zweckmäßig sein, solche Klauen 16 nur an einem der beiden Rastteile 11, 12 anzuordnen, während an dem jeweils gegenüberliegenden Rastteil 12, 11 entsprechende Aufnahmen vorgesehen sind. Im gezeigten Ausführungsbeispiel weisen beide Rastteile 11, 12 auf ihrer dem jeweils anderen Rastteil 12, 11 zugewandten Stirnseite je eine Anzahl von in axialer Richtung sich erstreckenden Klauen 16, 16' auf. Im Betriebszustand nach Fig. 3, in dem der motorseitige Rastteil 11 in einer drehmomentübertragenden Arbeitsposition unter Federvorspannung in der Axialrichtung 17 gegen den getriebeseitigen Rastteil 12 gedrückt ist, greifen die Klauen 16, 16' ineinander und stellen eine drehmomentübertragende Verbindung her.

In der gezeigten bevorzugten Ausführungsform sind die Klauen 16, 16' mit in der Absenkdrehrichtung 13 wirkenden Gleitflanken 18, 18' und in der entgegengesetzten Anhebedrehrichtung 14 wirkenden Hubflanken 19 ausgebildet. Die Hubflanken 19, 19' liegen dabei bezogen auf die Umfangsrichtung in einem steileren, betragsmäßig größeren Steigungswinkel als die Gleitflanken 18, 18'. In der gezeigten bevorzugten Ausführungsform sind die Hubflanken 19 sogar ausgehend vom Grundkörper des ersten Rastteils 11 entgegen der Absenkdrehrichtung 13 geneigt, wodurch eine Hinterschneidung gebildet ist. Sinngemäß das Gleiche gilt auch für die Hubflanken 19' der Klauen 16' des zweiten Rastteils 12, die entgegen der Anhebedrehrichtung 14 geneigt sind und deshalb ebenfalls eine Hinterschneidung bilden. Sofern die Klauen 16, 16' ineinander gerastet sind und ein hebender, drehmomentübertragender Antrieb in der Anhebedrehrichtung 14 erfolgt, führt die genannte Hinterschneidung in Unterstützung zur Vorspannkraft der Druckfedern 42 zu einer selbsttätigen bzw. selbsthemmenden Verkeilung der Klauen 16, 16'. Ein Durchrutschen bzw. Durchrasten des ersten Rastteils 11 gegenüber dem zweiten Rastteil 12 ist nicht möglich. Vielmehr können in der Anhebedrehrichtung 14 beliebige Drehmomente im Rahmen der zulässigen Grenzen übertragen werden.

Auch in der entgegengesetzten Absenkdrehrichtung 13 führen die aufeinander liegenden Gleitflanken 18, 18' infolge der Anpresskraft durch die Druckfedern 42 zu einer Drehmomentübertragung, wobei das maximal übertragbare Drehmoment jedoch begrenzt ist. Da die Gleitflanken 18 des ersten, motorseitigen Rastteils 11 ausgehend vom Grundkörper entgegen der Absenkdrehrichtung 13 geneigt sind, während die korrespondierenden Gleitflanken 18' des zweiten, getriebeseitigen Rastteils 12 in der entgegengesetzten Richtung geneigt sind, tendieren die paarweise aufeinander liegenden Gleitflanken 18,18' zu einem gegenseitigen Abgleiten. Ein solches Abgleiten führt aufgrund der Schrägstellung der Gleitflanken 18 zu einer axialen Relativbewegung zwischen den beiden Rastteilen 11, 12 entgegen der durch die Druckfedern 42 aufgebrachten Vorspannkraft. Bevor also ein solches Abgleiten eintritt, muss zunächst die Vorspannkraft der Druckfedern 42 überwunden werden. Die Vorspannkraft der Druckfedern 42 definiert damit über den Neigungswinkel der Gleitflanken 18, 18' und dem dazwischen herrschenden Gleitreibungskoeffizienten das in der Absenkdrehrichtung 13 maximal übertragbare Drehmoment. Sofern beispielsweise eine Kollision des Gegenstandes 2 bzw. der Halteeinrichtung 23 mit unvorhergesehenen Hindernissen bei einem Betrieb entsprechend der Darstellung nach Fig. 1 eintritt, kann das genannte in der Absenkdrehrichtung 13 übertragbare Drehmoment überschritten werden. Die Schrägstellung der Gleitflanken 18, 18' führt zur Überwindung der durch die Druckfedern 42 hervorgerufenen Vorspannkraft. Das motorseitige Rastteil 11 wird gegen die Vorspannkraft der Druckfedern 42 so weit angehoben, dass die Klauen 16, 16' nicht mehr ineinander greifen. Die Drehmomentübertragung wird unmittelbar unterbrochen auch dann, wenn die Motoreinheit 4 (Fig. 1 bis 3) noch einige Umdrehungen weiter läuft. Sofern jedoch die Motoreinheit 4 umgeschaltet und in der Anhebedrehrichtung 14 angetrieben wird, rastet das motorseitige Rastteil 11 infolge seiner Federvorspannung selbsttätig wieder in das getriebeseitige Rastteil 12 ein, wodurch die drehmomentübertragende Verbindung wieder hergestellt wird.

Insgesamt ist durch die oben beschriebene Anordnung ein Rastmechanismus 10 beschrieben, dessen Rastcharakteristik bezogen auf die Absenkdrehrichtung 13 bzw. die Anhebedrehrichtung 14 unsymmetrisch ist. Ein erstes, in der Absenkdrehrichtung 13 übertragbares Drehmoment ist kleiner als das zweite, in der Anhebedrehrichtung 14 übertragbare Drehmoment. Weiter ist erkennbar, dass die Rastcharakteristik des Rastmechanismus 10 ein überlastbedingtes Ausrasten des motorseitigen Rastteils 11 auf den getriebeseitigen Rastteil 12 nur in der Absenkdrehrichtung 13, nicht aber in der Anhebedrehrichtung 14 zulässt. Die oben beschriebenen und auch beanspruchten Relativbewegungen der beiden Rastteile 11, 12 sind als Relativbewegungen mit beliebigen Bezugspunkten zu verstehen. Zwar liegt im gezeigten Ausführungsbeispiel das getriebeseitige Rastteil 12 in der Axialrichtung 17 fest, während das motorseitige Rastteil 11 in der Axialrichtung bewegbar ist. Es kann aber eine umgekehrte Festlegung bzw. Verschiebbarkeit mit gleicher Wirkung vorgesehen sein.

Die gezeigte Anordnung ist für bestimmte Arbeitsdrehrichtungen ausgestaltet, wobei hier der Pfeil der Absenkdrehrichtung 13 zeichnerisch nach links und der Pfeil der Anhebedrehrichtung 14 zeichnerisch nach rechts zeigt. Je nach Anwendungsfall können die Absenkdrehrichtung 13 und die Anhebedrehrichtung 14 aber auch entgegengesetzt verlaufen. In diesem Falle wären die Klauen 16, 16' entsprechend spiegelbildlich zu gestalten.

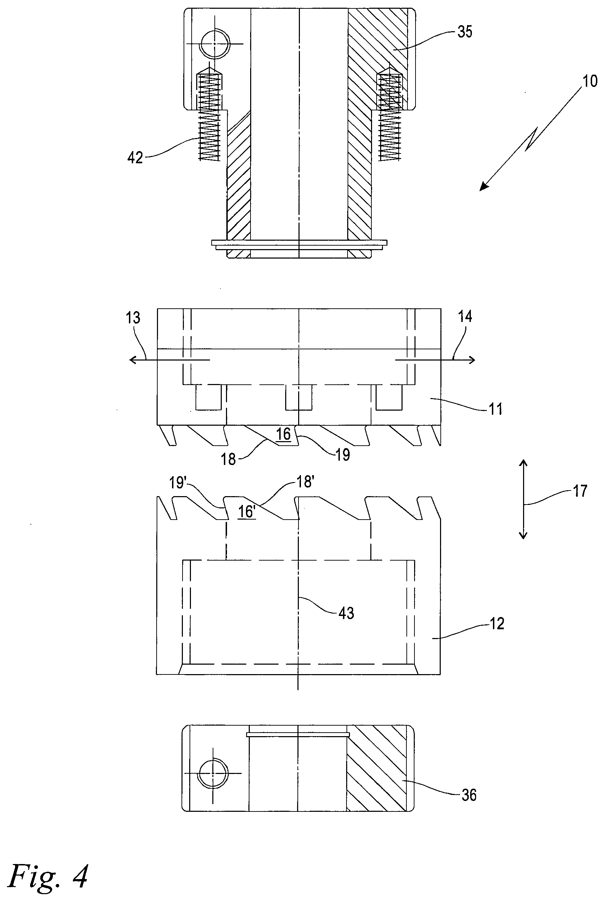

Fig. 5 zeigt in einer Draufsicht das Rastteil 11 nach Fig. 4, demnach mehrere Klauen 16 gleichmäßig um die Drehachse 43 verteilt angeordnet sind. Diese gleichmäßige Verteilung findet lediglich an einer einzigen Stelle eine Unterbrechung, demnach anstelle einer Klaue 16 ein axial hervorstehender Vorsprung 20 und in Umfangsrichtung daneben eine axial zurückliegende Vorsprungaufnahme 21 im Rastteil 11 ausgeformt sind. Die Form der Vorsprungaufnahme 21 korrespondiert genau mit der Form des Vorsprungs 20. Das hier nicht dargestellte Rastteil 12 ist bezüglich der Klauen 16' (Fig. 4) identisch ausgestaltet und weist ebenfalls identisch einen solchen Vorsprung 20 und eine solche Vorsprungaufnahme 21 auf. Bezüglich der stirnseitigen Ausgestaltung sind demnach beide Rastteile 11, 12 Gleichteile. Zusammen bilden die Vorsprünge 20 und die Vorsprungaufnahmen 21 Drehpositioniermittel 15, die eine Einrastung des motorseitigen Rastteils 11 in das getriebeseitige Rastteil 12 bezogen auf die Anhebedrehrichtung 14 innerhalb von 360° in nur einer relativen Drehwinkelstellung ermöglichen. In allen abweichenden Drehwinkelstellungen kollidieren die Vorsprünge 20 mit den gegenüberliegenden Klauen 16, 16', so dass eine Einrastung nicht möglich ist.

Das hier gezeigte Rastteil 11 weist radial innenseitig der Klauen 16 noch eine ringförmige Gleitfläche 47, in die der Vorsprung 20 flächenbündig übergeht. Dies bedeutet mit anderen Worten, dass die obere, freie Fläche des Vorsprungs 20 bezogen auf die Richtung der Drehachse 43 auf gleichem und konstantem Höhenniveau liegt wie die ebene Gleitfläche 47. Beide sind gegenüber den oberen, freien Flächen der Klauen 16 erhaben. Die ringförmige Gleitfläche 47 läuft nahezu vollständig um die Drehachse 43 herum und ist lediglich an einer Stelle, nämlich durch die Vorsprungaufnahme 21 unterbrochen. Das gegenüberliegende Rastteil 12 (Fig. 4) weist eine solche Gleitfläche 47 nicht auf. Der hier nicht gezeigte, aber radial sich nach innen bis zur Gleitfläche 47 erstreckende Vorsprung 20 des gegenüberliegenden Rastteils 12 gleitet bei Ausrasten der Überlastkupplung 9 auf der Gleitfläche 47 ab, ohne mit den Klauen 16 zu kollidieren, bis er in die zugeordnete Vorsprungaufnahme 20 einrasten kann.

Der Darstellung nach Fig. 3 ist noch entnehmbar, dass die Überlastkupplung 9 eine Sensoranordnung 22 aufweist. Zur Sensoranordnung 22 gehören zwei in der Axialrichtung 17 übereinander liegende Sensoren 45 sowie ein um das obere, motorseitige Rastteil 11 herumgeführtes Metallband 44. Die beiden Sensoren 45 sind in der Axialrichtung 17 derart positioniert, dass der untere Sensor 45 das Metallband 44 dann erfasst, wenn das obere, axial verschiebbare Rastteil 11 nach unten gesenkt und eingerastet ist, während der obere Sensor 45 das Metallband 44 dann sensorisch erfasst, wenn das obere, motorseitige Rastteil 11 angehoben und aus dem unteren, getriebeseitigen Rastteil 12 ausgerastet ist. Mittels der Sensoranordnung 22 kann also der ein- bzw. ausgerastete Zustand des Rastmechanismus 10 erfasst werden.

Aus der Zusammenschau der Fig. 1 bis 3 ergibt sich noch, dass eine Steuereinrichtung 24 zum Betrieb des Handhabungssystems 25, und insbesondere zum Betrieb des Hebesystems 1 vorgesehen ist. Die ermittelten Daten des Drehwinkelgebers 6 und der Sensoranordnung 22 werden der Steuereinrichtung 24 zugeführt. Diese ist in ihrer Ausgestaltung und Programmierung derart ausgelegt, dass unter Berücksichtigung der Daten des Drehwinkelgebers 6 und der Sensoranordnung 22 die Motoreinheit 4 und damit das Hebesystem 1 insgesamt zur Ausführung des nachfolgend beschriebenen Verfahrens angesteuert wird:

Initiierend wird zunächst eine Höhenkalibrierung des Systems vorgenommen, indem ein Referenzhöhenwert H (Fig. 1, 2) der Halteeinrichtung 23 bzw. des Gegenstandes 2 bestimmt und der Steuereinrichtung 24 zur Verfügung gestellt wird. Des weiteren liegt in der Steuereinrichtung 24 eine Information über das feste Übersetzungsverhältnis des Getriebes 7 derart vor, dass ein solcher, in Fig. 2 eingetragener Hub b der Halteeinrichtung 23 bekannt ist, der aus einer 360°-Umdrehung der motorseitigen Abtriebswelle 5 folgt. Beim Referenzhöhenwert H gibt der Drehwinkelgeber 6 eine bestimmte Drehwinkelstellung der Antriebswelle 5 an. Hiervon ausgehend können entsprechend der Darstellung nach Fig. 1 innerhalb eines Arbeitshöhenbereichs a beliebige, hier beispielhaft als h, h' eingezeichnete relative Höhen der Halteeinrichtung 23 bzw. des Gegenstandes 2 angefahren werden. Die Einheit aus Drehwinkelgeber 6 und Steuereinrichtung 24 ermittelt hierbei ein ganzzahliges Vielfaches von 360°-Umdrehungen der Antriebswelle 5 und bildet außerdem eine Differenz zwischen dem Drehwinkelwert beim Referenzhöhenwert H und dem Drehwinkelwert bei der aktuellen Höhe h, h'. Hieraus und aus dem Hub b kann jederzeit die aktuelle Höhe h, h' der Halteeinrichtung 23 bzw. des Gegenstandes 2 in der Steuereinrichtung 24 ermittelt werden. Letzteres setzt allerdings voraus, dass eine eindeutige Drehwinkelzuordnung zwischen der Antriebswelle 5 und der Eingangswelle 8 ununterbrochen aufrechterhalten bleibt, dass also die Überlastkupplung 9 nicht ausrastet.

Sollte nun eine unerwartete Kollision der Halteeinrichtung 23 bzw. des Gegenstandes 2 mit einem unerwarteten Hindernis eintreten und die Überlastkupplung 9 ausrasten, gehen diese Drehwinkelzuordnung und damit der Referenzhöhenwert H verloren. Der Referenzhöhenwert H muss wiederhergestellt werden. Hierzu wird mittels der Steuereinrichtung 24, welche über die Sensoranordnung 22 das Ausrasten des Überlastkupplung 9 erfasst hat, die Motoreinheit 4 in die Anhebedrehrichtung 14 geschaltet und dadurch ein Anheben der Halteeinrichtung 23 eingeleitet. In der Folge rastet zunächst die Überlastkupplung 9 in oben beschriebener Weise wieder ein. Anschließend wird die Halteeinrichtung 23 mit oder ohne den darin gehaltenen Gegenstand 2 bis in einen in Fig. 2 dargestellten Referenzhöhenbereich r angehoben. Der Referenzhöhenbereich r weist eine Höhenerstreckung auf, die ≤ dem oben beschriebenen Hub b ist. Da der oben beschriebene Rastmechanismus 10 bezogen auf die Anhebedrehrichtung 14 innerhalb von 360° in nur einer möglichen und genau definierten relativen Drehwinkelstellung wieder eingerastet ist, reicht eine Grobpositionierung innerhalb des Referenzhöhenbereichs r aus. Aus der wiederhergestellten festen Drehwinkelzuordnung in der Überlastkupplung 9 und dem dann aktuellen Drehwinkelwert des Drehwinkelgebers 6 kann ohne Kenntnis der zuvor stattgefundenen durchrutschenden Umdrehungen die aktuelle Höhe exakt bestimmt und der Referenzhöhenwert H wieder hergestellt werden. Das Anfahren bzw. die messtechnische Ermittlung eines exakten Referenzhöhenwertes sowie eine neue Zuordnung von Messwerten des Drehwinkelgebers 6 sind nicht erforderlich. Vielmehr kann die Wiederherstellung des Referenzhöhenwertes H mittels der Steuereinrichtung 24 automatisiert ohne manuelles Zutun schnell vorgenommen werden, wobei das gezeigte Hebesystem 1 unmittelbar danach, ggf. noch nach Beseitigung des unvorhergesehenen und zur Kollision führenden Hindernisses wieder einsatzbereit ist.

Die erfindungsgemäße Überlastkupplung 9 wurde vorstehend im Zusammenhang mit einem vertikalen Hebesystem 1 mit einer vertikalen Hubachse 3 (Fig. 1) beschrieben. Im Rahmen der Erfindung kann die Überlastkupplung 9 aber auch in Handhabungssystemen mit horizontaler oder geneigter Verfahrachse eingesetzt werden. Für die hier in Rede stehende vertikale Hubachse 3 ist eine unsymmetrische Rastcharakteristik für entgegengesetzte Drehrichtungen 13, 14 beschrieben. Insbesondere im Falle einer horizontalen Verfahrachse kann aber im Rahmen der Erfindung auch eine symmetrische Rastcharakteristik beispielsweise in Folge von symmetrisch ausgestalteten Klauen 16 (Fig. 4) zweckmäßig sein.

## Patentansprüche

1. Hebesystem (1) mit einer Halteeinrichtung (23) zum Anheben und Absenken eines Gegenstandes (2) in Richtung einer vertikalen Hubachse (3), umfassend eine Motoreinheit (4) mit einer Antriebswelle (5), ein Getriebe (7) mit einer Eingangswelle (8) sowie eine Überlastkupplung (9), mittels derer die Antriebswelle (5) der Motoreinheit (4) und die Eingangswelle (8) des Getriebes (7) verbunden sind, wobei die Überlastkupplung (9) einen Rastmechanismus (10) mit einem motorseitigen Rastteil (11) und einem getriebeseitigen Rastteil (12) aufweist, wobei der Rastmechanismus (10) eine Rastcharakteristik aufweist, welche ein erstes übertragbares Drehmoment in einer Absenkdrehrichtung (13) und ein zweites übertragbares Drehmoment in einer Anhebedrehrichtung (14) derart vorsieht, dass das erste übertragbare Drehmoment kleiner als das zweite übertragbare Drehmoment ist, **dadurch gekennzeichnet, dass** das Hebesystem einen Drehwinkelgeber (6) für die Antriebswelle (5) umfasst, und wobei der Rastmechanismus (10) derart ausgestaltete Drehpositioniermittel (15) aufweist, dass eine Einrastung des motorseitigen Rastteils (11) in das getriebeseitige Rastteil (12) bezogen auf die Anhebedrehrichtung (14) innerhalb von 360° in nur einer relativen Drehwinkelstellung möglich ist.

2. Hebesystem nach Anspruch 1,
**dadurch gekennzeichnet, dass** die Rastcharakteristik des Rastmechanismus (10) ein überlastbedingtes Ausrasten des motorseitigen Rastteils (11) aus dem getriebeseitigen Rastteil (12) nur in der Absenkdrehrichtung (13) zulässt.

3. Hebesystem nach Anspruch 1 oder 2,
**dadurch gekennzeichnet, dass** die Überlastkupplung (9) eine Klauenkupplung mit stirnseitigen Klauen (16) am motorseitigen Rastteil (11) und/oder am getriebeseitigen Rastteil (12) ist, wobei das motorseitige Rastteil (11) in einer drehmomentübertragenden Arbeitsposition unter Federvorspannung in einer Axialrichtung (17) gegen das getriebeseitige Rastteil (12) gedrückt ist, und wobei das motorseitige Rastteil (11) aus seiner Arbeitsposition heraus in der Axialrichtung (17) gegenüber dem getriebeseitigen Rastteil (12) in eine Ausrastposition relativ verschiebbar ist.

4. Hebesystem nach Anspruch 3,
**dadurch gekennzeichnet, dass** die Klauen (16) unsymmetrisch mit in der Absenkdrehrichtung (13) wirkenden Gleitflanken (18) und in der Anhebedrehrichtung (14) wirkenden, im Vergleich zu den Gleitflanken (18) steileren Hubflanken (19) ausgebildet sind.

5. Hebesystem nach Anspruch 4,
**dadurch gekennzeichnet, dass** durch die Hubflanken (19) jeweils eine Hinterschneidung gebildet ist.

6. Hebesystem nach einem der Ansprüche 3 bis 5,
**dadurch gekennzeichnet, dass** die Drehpositioniermittel (15) durch einen axialen Vorsprung (20) und nur eine einzige zum Vorsprung (20) korrespondierende Vorsprungaufnahme (21) gebildet sind.

7. Hebesystem nach Anspruch 6,
**dadurch gekennzeichnet, dass** der Vorsprung (20) flächenbündig in eine ringförmige Gleitfläche (47) übergeht, wobei die ringförmige Gleitfläche (47) durch die Vorsprungaufnahme (21) unterbrochen ist.

8. Hebesystem nach einem der Ansprüche 3 bis 7,
**dadurch gekennzeichnet, dass** das motorseitige Rastteil (11) und/oder das getriebeseitige Rastteil (12) an einem zugeordneten Adapterstück (35, 36) längsverschieblich und drehfest insbesondere mit einer Vielkeilverzahnung (39, 40) gehalten sind, wobei Mittel vorgesehen sind, die eine Montage des motorseitigen Rastteils (11) und/oder des getriebeseitigen Rastteils (12) am zugeordneten Adapterstück (35, 36) in nur einer relativen Drehwinkellage erlauben.

9. Hebesystem nach einem der Ansprüche 1 bis 8,
**dadurch gekennzeichnet, dass** die Überlastkupplung (9) eine Sensoranordnung (22) zur Erfassung des ein- bzw. ausgerasteten Zustandes des Rastmechanismus (10) umfasst.

10. Hebesystem nach einem der Ansprüche 1 bis 9,
**dadurch gekennzeichnet, dass** eine Steuereinrichtung (24) vorgesehen ist, die zur Ausführung des Verfahrens nach Anspruch 12 ausgelegt ist.

11. Verwendung einer Überlastkupplung (9) in einem Hebesystem nach einem der Ansprüche 1 bis 10,
**dadurch gekennzeichnet, dass** die Überlastkupplung (9) einen Rastmechanismus (10) mit einem motorseitigen Rastteil (11) und einem getriebeseitigen Rastteil (12) aufweist, wobei der Rastmechanismus (10) eine Rastcharakteristik aufweist, welche ein erstes übertragbares Drehmoment in einer Absenkdrehrichtung (13) und ein zweites übertragbares Drehmoment in einer Anhebedrehrichtung (14) derart vorsieht, dass das erste übertragbare Drehmoment kleiner als das zweite übertragbare Drehmoment ist, und wobei der Rastmechanismus (10) derart ausgestaltete Drehpositioniermittel (15) aufweist, dass eine Einrastung des motorseitigen Rastteils (11) in das getriebeseitige Rastteil (12) bezogen auf die Anhebedrehrichtung (14) innerhalb von 360° in nur einer relativen Drehwinkelstellung möglich ist.

12. Verfahren zum Betrieb eines Hebesystems (1) nach einem der Ansprüche 1 bis 10, **gekennzeichnet durch** folgende Verfahrensschritte:
- Die Halteeinrichtung (23) wird innerhalb eines Arbeitshöhenbereiches (a) mittels des Hebesystems (1) bewegt, wobei eine aktuelle Höhe (h) der Halteeinrichtung (23) aus einem zuvor ermittelten Referenzhöhenwert (H) und den Signalen des Drehwinkelgebers (6) bestimmt wird;
- sofern bei einem Absenken der Halteeinrichtung (23) der Rastmechanismus (10) der Überlastkupplung (9) ausrastet, wird mittels der Motoreinheit (4) ein Anheben der Halteeinrichtung (23) eingeleitet, in dessen Folge der ausgerastete Rastmechanismus (10) bezogen auf die Anhebedrehrichtung (14) innerhalb von 360° in nur einer möglichen und definierten relativen Drehwinkelstellung wieder einrastet und die Halteeinrichtung (23) angehoben wird;
- die Halteeinrichtung (23) wird weiter bis in einen Referenzhöhenbereich (r) angehoben, wobei die Höhenerstreckung des Referenzhöhenbereichs (r) ≤ einem solchen Hub (b) der Halteeinrichtung (23) ist, der aus einer 360°-Umdrehung der Antriebswelle (5) der Motoreinheit (4) folgt;
- innerhalb des Referenzhöhenbereichs (r) wird die aktuelle Drehwinkelstellung der Antriebswelle (5) mittels des Drehwinkelgebers (6) ermittelt und daraus der Referenzhöhenwert (H) der Halteeinrichtung (23) wiederhergestellt;
- ausgehend von dem Referenzhöhenbereich (r) wird die Halteeinrichtung (23) erneut innerhalb des Arbeitshöhenbereiches (a) bewegt und dabei erneut ihre aktuelle Höhe (h) aus dem wiederhergestellten Referenzhöhenwert (H) und den Signalen des Drehwinkelgebers (6) bestimmt.

## Claims

1. Lifting system (1) having a holding means (23) for raising and lowering an object (2) in the direction of a vertical hoist axis (3), comprising a motor unit (4) with a drive shaft (5), a gear assembly (7) with an input shaft (8), and also an overload coupling (9), by means of which the drive shaft (5) of the motor unit (4) and the input shaft (8) of the gear assembly (7) are connected, wherein the overload coupling (9) has a latching mechanism (10) with a motor-side latching part (11) and a gear assembly-side latching part (12), wherein the latching mechanism (10) has a latching characteristic which provides for a first transmittable torque in a lowering rotational direction (13) and a second transmittable torque in a raising rotational direction (14) in such a way that the first transmittable torque is smaller than the second transmittable torque, **characterised in that** the lifting system comprises a rotation angle sensor (2) for the drive shaft (5),
and wherein the latching mechanism (10) has rotation positioning means (15) configured so that an engagement of the motor-side latching part (11) in the gear assembly-side latching part (12) with respect to the raising rotational direction (14) within 360° is possible in only one relative rotation angle position.

2. Lifting system according to claim 1,
**characterised in that** the latching characteristic of the latching mechanism (10) allows an overload-dependent disengagement of the motor-side latching part (11) from the gear assembly-side latching part (12) only in the lowering rotational direction (13).

3. Lifting system according to claim 1 or 2,
**characterised in that** the overload coupling (9) is a claw coupling with frontside claws (10) on the motor-side latching part (11) and / or on the gear assembly-side latching part (12), wherein the motor-side latching part (11) is pressed in a torque-transmitting working position with spring preload in an axial direction (17) against the gear assembly-side latching part (12), and wherein the motor-side latching part (11) can be relatively displaced out of its working position in the axial direction (17) with respect to the gear assembly-side latching part (12) into a disengaged position.

4. Lifting system according to claim 3,
**characterised in that** the claws (16) are formed unsymmetrically with sliding flanks (18) acting in the lowering rotational direction (13) and steeper lifting flanks (19), in comparison with the sliding flanks (18), acting in the raising rotational direction.

5. Lifting system according to claim 4,
**characterised in that** a respective undercut is formed by the lifting flanks (19).

6. Lifting system according to one of claims 3 to 5,
**characterised in that** the rotation positioning means (15) are formed by an axial projection (20) and only a single projection receptacle (21) corresponding to the projection (20).

7. Lifting system according to claim 6,
**characterised in that** the projection (20) merges in a surface-flush way into an annular sliding area (47), wherein the annular sliding area (47) is interrupted by the projection receptacle (21).

8. Lifting system according to one of claims 3 to 7,
**characterised in that** the motor-side latching part (11) and / or the gear assembly-side latching part (12) are held on an assigned adapter piece (35, 36) to be longitudinally displaceable and rotationally secure in particular with a multi-wedge toothing (39, 40), wherein means are provided that allow an assembly of the motor-side latching part (11) and / or the gear assembly-side latching part (12) on the assigned adapter piece (35, 36) in only one relative rotation angle position.

9. Lifting system according to one of claims 1 to 8,
**characterised in that** the overload coupling (9) comprises a sensor arrangement (22) to detect an engaged or disengaged state of the latching mechanism (10).

10. Lifting system according to one of claims 1 to 9,
**characterised in that** a control means (24) is provided which is designed to carry out the method according to claim 12.

11. Use of an overload coupling (9) in a lifting system according to one of claims 1 to 10,
**characterised in that** the overload coupling (9) has a latching mechanism (10) with a motor-side latching part (11) and a gear assembly-side latching part (11), wherein the latching mechanism (10) has a latching characteristic which provides for a first transmittable torque in a lowering rotational direction (13) and a second transmittable torque in a raising rotational direction (14) in such a way that the first transmittable torque is smaller than the second transmittable torque, and wherein the latching mechanism (10) has rotation positioning means (15) configured so that an engagement of the motor-side latching part (11) in the gear assembly-side latching part (12) with respect to the raising rotational direction within 360° is possible in only one relative direction.

12. Method for operating a lifting system (1) according to one of claims 1 to 10, **characterised by** the following method steps:
- the holding means (23) are moved within a working height range (a) by means of the lifting system (1), wherein a current height (h) of the holding means (23) is determined from a previously detected reference height value (H) and the signals of the rotation angle sensor (6),
- if, when the holding means (23) are lowered, the latching mechanism (10) of the overload coupling (9) disengages, lifting of the holding means (23) is introduced by means of the motor unit (4), as a consequence of which the disengaged latching mechanism (10) with respect to the raising rotational direction (14) engages again in only one possible and defined relative rotation angle position within 360°, and the holding means (23) are raised,
- the holding means (23) are further raised as far as a reference height range (r), wherein the height extension of the reference height range (r) is <= such a lift (b) of the holding means (23) which follows from a 360° revolution of the drive shaft (5) of the motor unit (4),
- the current rotation angle position of the drive shaft (5) is detected within the reference height range (r) by means of the rotation angle sensor (6) and the reference height value (H) of the holding means (23) is reproduced therefrom,
- on the basis of the reference height range (r), the holding means (23) are moved again within the working height range (a) and thereby again determine their current height (h) from the reproduced reference height value (H) and the signals of the rotation angle sensor (6).

## Revendications

1. Système de levage (1) avec un dispositif de fixation (23) pour soulever et abaisser un objet (2) dans le sens d'un axe de levage vertical (3), comprenant une unité motrice (4) avec un arbre d'entraînement (5), une transmission (7) avec un arbre d'entrée (8), et un accouplement de surcharge (9) à l'aide duquel l'arbre d'entraînement (5) de l'unité motrice (4) et l'arbre d'entrée (8) de la transmission (7) sont reliés, étant précisé que l'accouplement de surcharge (9) comporte un mécanisme d'enclenchement (10) avec un élément d'enclenchement côté moteur (11) et un élément d'enclenchement côté transmission (12), étant précisé que le mécanisme d'enclenchement (10) présente une caractéristique d'enclenchement qui prévoit un premier couple de rotation apte à être transmis, dans un sens de rotation d'abaissement (13), et un second couple de rotation apte à être transmis, dans un sens de rotation de soulèvement (14), de telle sorte que le premier couple de rotation apte à être transmis soit inférieur au second,
**caractérisé en ce que** le système de levage comprend un capteur d'angle de rotation (6) pour l'arbre d'entraînement (5), et étant précisé que le mécanisme d'enclenchement (10) comporte des moyens de positionnement en rotation (15) qui sont conçus de telle sorte qu'un enclenchement de l'élément d'enclenchement côté moteur (11) dans l'élément d'enclenchement côté transmission (12) par rapport au sens de rotation de soulèvement (14) à l'intérieur de 360° ne soit possible que dans une position d'angle de rotation relative.

2. Système de levage selon la revendication 1,
**caractérisé en ce que** la caractéristique d'enclenchement du mécanisme d'enclenchement (10) n'autorise un désenclenchement, dû à une surcharge, de l'élément d'enclenchement côté moteur (11) et de l'élément d'enclenchement côté transmission (12) que dans le sens de rotation d'abaissement (13).

3. Système de levage selon la revendication 1 ou 2,
**caractérisé en ce que** l'accouplement de surcharge (9) est un accouplement à griffes avec des griffes frontales (16) sur l'élément d'enclenchement côté moteur (11) et/ou sur l'élément d'enclenchement côté transmission (12), étant précisé que l'élément d'enclenchement côté moteur (11), dans une position de travail transmettant le couple de rotation, est poussé sous une contrainte de ressort dans un sens axial (17) contre l'élément d'enclenchement côté transmission (12), et que l'élément d'enclenchement côté moteur (11), à partir de sa position de travail, est apte à coulisser dans le sens axial (17) par rapport à l'élément d'enclenchement côté transmission (12) jusqu'à une position de désenclenchement.

4. Système de levage selon la revendication 3,
**caractérisé en ce que** les griffes (16) ont une forme asymétrique, avec des flancs de glissement (18) qui agissent dans le sens de rotation d'abaissement (13), et des flancs de levage (19), à plus grande pente que les flancs de glissement (18), qui agissent dans le sens de rotation de soulèvement (14).

5. Système de levage selon la revendication 4,
**caractérisé en ce qu'**une contre-dépouille est formée par chaque flanc de soulèvement (19).

6. Système de levage selon l'une des revendications 3 à 5,
**caractérisé en ce que** les moyens de positionnement en rotation (15) sont formés par une saillie axiale (20) et par un seul logement de saillie (21) correspondant à ladite saillie (20).

7. Système de levage selon la revendication 6,
**caractérisé en ce que** dans le prolongement de la saillie (20), de niveau, est prévue une surface de glissement annulaire (47), étant précisé que la surface de glissement annulaire (47) est interrompue par le logement pour saillie (21).

8. Système de levage selon l'une des revendications 3 à 7,
**caractérisé en ce que** l'élément d'enclenchement côté moteur (11) et/ou l'élément d'enclenchement côté transmission (12) sont fixés à un adaptateur associé (35, 36) en étant aptes à coulisser longitudinalement et fixes en rotation, en particulier avec une denture à cales multiples (39, 40), étant précisé qu'il est prévu des moyens qui permettent un montage de l'élément d'enclenchement côté moteur (11) et/ou de l'élément d'enclenchement côté transmission (12) sur l'adaptateur associé (35, 36) dans une seule position d'angle de rotation relative.

9. Système de levage selon l'une des revendications 1 à 8,
**caractérisé en ce que** l'accouplement de surcharge (9) comprend un dispositif formant capteur (22) pour détecter l'état enclenché ou désenclenché du mécanisme d'enclenchement (10).

10. Système de levage selon l'une des revendications 1 à 9,
**caractérisé en ce qu'**il est prévu un dispositif de commande (24) qui est conçu pour mettre en oeuvre le procédé selon la revendication 12.

11. Utilisation d'un accouplement de surcharge (9) dans un système de levage selon l'une des revendications 1 à 10,
**caractérisée en ce que** l'accouplement de surcharge (9) comporte un mécanisme d'enclenchement (10) avec un élément d'enclenchement côté moteur (11) et un élément d'enclenchement côté transmission (12), étant précisé que le mécanisme d'enclenchement (10) présente une caractéristique d'enclenchement qui prévoit un premier couple de rotation apte à être transmis, dans un sens de rotation d'abaissement (13), et un second couple de rotation apte à être transmis, dans un sens de rotation de soulèvement (14), de telle sorte que le premier couple de rotation apte à être transmis soit inférieur au second, et que le mécanisme d'enclenchement (10) comporte des moyens de positionnement en rotation (15) qui sont conçus de telle sorte qu'un enclenchement de l'élément d'enclenchement côté moteur (11) dans l'élément d'enclenchement côté transmission (12) par rapport au sens de rotation de soulèvement (14) à l'intérieur de 360° ne soit possible que dans une position d'angle de rotation relative.

12. Procédé pour le fonctionnement d'un système de levage (1) selon l'une des revendications 1 à 10,
**caractérisé par** les étapes de procédé suivantes :
- le dispositif de fixation (23) est déplacé à l'intérieur d'une zone de hauteur de travail (a) à l'aide du système de levage (1), étant précisé qu'une hauteur actuelle (h) du dispositif de fixation (23) est définie à partir d'une valeur de hauteur de référence (H) déterminée au préalable, et des signaux du capteur d'angle de rotation(6) ;
- dans la mesure où lors d'un abaissement du dispositif de fixation (23) le mécanisme d'enclenchement (10) de l'accouplement de surcharge (9) se désenclenche, un soulèvement du dispositif de fixation (23) est amorcé à l'aide de l'unité motrice, à la suite de quoi le mécanisme d'enclenchement (10) désenclenché ne se réenclenche que dans une position d'angle de rotation relative possible et définie, par rapport au sens de rotation de soulèvement (14) à l'intérieur de 360°, et le dispositif de fixation (23) est soulevé ;
- le dispositif de fixation (23) est encore soulevé jusqu'à une zone de hauteur de référence (r), étant précisé que l'extension en hauteur de ladite zone de hauteur de référence (r) ≤ une course (b) du dispositif de fixation (23) qui résulte d'une rotation à 360° de l'arbre d'entraînement (5) de l'unité motrice (4) ;
- à l'intérieur de la zone de hauteur de référence (r), la position d'angle de rotation actuelle de l'arbre d'entraînement (5) est déterminée à l'aide du capteur d'angle de rotation (6), et à partir de là la valeur de hauteur de référence (H) du dispositif de fixation (23) est rétablie ;
- à partir de la zone de hauteur de référence (r), le dispositif de fixation (23) est à nouveau déplacé à l'intérieur de la zone de hauteur de travail (a), et sa hauteur actuelle (h) est à nouveau définie à partir de la valeur de hauteur de référence (H) rétablie et des signaux du capteur d'angle de rotation (6).
